# EUROPÄISCHE PATENTANMELDUNG

(11) **EP 1 069 496 A2**
(43) Veröffentlichungstag der Anmeldung: **17.01.2001**
(21) Anmeldenummer: 00113105.1
(22) Anmeldetag: 28.06.2000
(51) Int. Cl.: G06F 3/023

(54) **Verfahren und Vorrichtung zur Darstellung von Eingabeoptionen**

(30) Priorität: 14.07.1999 DE 19932776
(71) Anmelder: Volkswagen Aktiengesellschaft, 38436 Wolfsburg (DE)
(72) Erfinder: Petzold, Bernd, Dr.-Ing., 31515 Wunstorf (DE); Lilienthal, Jörg, 38518 Gifhorn (DE)

(57) **Zusammenfassung**

Die Erfindung betrifft eine multifunktionale Anzeige- und Bedieneinrichtung (1) und ein Verfahren zum Betrieb einer solchen Einrichtung, mit mindestens einer Anzeigeeinrichtung (2), mindestens einer Eingabeeinrichtung (3, 9) und einem Steuergerät (4), wobei das Steuergerät (4) Anzahl und/oder Dauer und/oder Kombinationen von Eingaben und Einstellungen erfaßt, daraus Präferenzen ableitet und in Abhängigkeit der Präferenzen zumindest eine Bedienstruktur und/oder mindestens eine Auswahlliste modifiziert.

## Beschreibung

Die Erfindung betrifft eine multifunktionale Anzeige- und Bedieneinrichtung, mit mindestens einer Anzeigeeinrichtung zur menü- und funktionsbezogenen Wiedergabe von Informationen und/oder Parametern, mindestens einer Eingabeeinrichtung zur Menü- und/oder Funktionsauswahl und/oder ―betätigung und einem Steuergerät, und ein Verfahren zum Betrieb einer solchen multifunktionalen Anzeige- und Bedieneinrichtung.

Aus der europäischen Patentschrift EP 366 132 B1 ist eine Multifunktions-Bedieneinrichtung für Kraftfahrzeuge bekannt, mit deren Hilfe eine Vielzahl von im Fahrzeug vorhandenen Geräten, wie zum Beispiel eine Klimaeinrichtung, eine Navigationseinrichtung und mehrere Audiogeräte, bedient werden kann. Dazu wird auf der Anzeigeeinrichtung eine Menü- und Funktionsstruktur wiedergegeben, deren einzelne Menü- und Funktionspunkte mit Hilfe einer Bedieneinrichtung an- und ausgewählt werden. Mit der Komplexität der einzelnen elektrischen Geräte und der steigenden Anzahl von Geräten, die über die multifunktionale Bedieneinrichtung bedient werden, werden automatisch auch die Menü- und Bedienstrukturen immer verzweigter und damit die Anzeigedarstellung immer komplexer.

Diese Vielzahl von Bedienmöglichkeiten führt jedoch dazu, daß ein Nutzer kaum noch in der Lage ist, sich alle Bedienmöglichkeiten zu merken bzw. die angegebenen Möglichkeiten zu verstehen. Dies führt zu einer Überforderung des Nutzers, selbst wenn dieser nur einfache Einstellungen vornehmen möchte und eine Vielzahl der angebotenen Möglichkeiten gar nicht verwenden möchte. Verschärft treten diese Probleme in einem Kraftfahrzeug auf, da hier zum einen eine Vielzahl unterschiedlicher Komponenten bedient werden muß und zum anderen der Nutzer gleichzeitig durch den Straßenverkehr bereits derart beansprucht wird, daß detaillierte Beschäftigungen mit den Eingabeoptionen nicht möglich sind.

Der Erfindung liegt daher das technische Problem zugrunde, eine multifunktionale Anzeige- und Bedieneinrichtung sowie ein Verfahren zum Betrieb einer solchen Einrichtung zu schaffen, mittels derer ein Nutzer vereinfacht und schneller die ihn interessierenden Eingabeoptionen dargestellt bekommt.

Die Lösung des technischen Problems ergibt sich durch die Merkmale der Patentansprüche 1 und 6. Weitere vorteilhafte Ausgestaltungen der Erfindung ergeben sich aus den Unteransprüchen.

Durch die Erfassung der Anzahl und/oder der Dauer und/oder Kombinationen von Bedieneingaben und/oder Einstellungen, aus denen mindestens eine Präferenz abgeleitet wird, wobei in Abhängigkeit der Präferenzen zumindest eine Bedien- oder Menüstruktur und/oder mindestens eine Auswahlliste modifiziert wird und somit auf der Anzeigeeinrichtung präferierten Eingaben und Einstellungen an exponierter Stelle dargestellt werden, erhält der Nutzer eine Vorauswahl unter Berücksichtigung seiner Eingabegewohnheiten, wodurch im Regelfall eine schnellere und einfachere Orientierung und Eingabe ermöglicht wird.

In einer weiteren bevorzugten Ausführungsform werden die Präferenzen nutzerspezifisch und/oder im Kraftfahrzeug auch sitzplatzbezogen erfaßt und abgespeichert, wodurch die Vorteile auch bei Nutzung durch verschiedene Nutzer erhalten bleiben. Des weiteren ist auch situationsspezifische Adaption der Funktionsbelegung möglich.

In einer weiteren bevorzugten Ausführungsform sind den Eingaben und Einstellungen unmittelbar diese auslösenden Eingabemittel zugeordnet. Hierzu sind die Eingabemittel als Softkeys ausgebildet. Dadurch wird die Eingabe vereinfacht, da der Nutzer unmittelbar mit der visuellen Erfassung einer Eingabeoption die Eingabe vornehmen kann. Unter Softkeys werden allgemein Eingabeelemente verstanden, deren Funktionsbelegung durch Software veränderbar ist. Erfolgt nun eine Änderung der Darstellung der Eingaben bzw. Einstellungen, so werden auch die entsprechend zugeordneten Eingabemittel verändert angeordnet. Eine bevorzugte Ausführungsform ist ein Touch-Screen, wo die Eingaben bzw. Einstellungen in berührungssensitiven Feldern angeordnet werden.
In einer weiteren bevorzugten Ausführungsform wird eine geänderte Darstellung dem zunächst angezeigt, wobei der Nutzer dann entscheiden kann, ob dieser die geänderte Darstellung übernehmen möchte oder die ursprüngliche Darstellung beibehalten möchte. Weiter kann vorgesehen sein, daß die neue Funktionsbelegung nur temporär übernommen wird.

Werden bestimmte Funktionen, Eingabemöglichkeiten oder Listenbestandteile über einen längeren Zeitraum nicht genutzt, so können diese unterdrückt oder an untergeordneter Stelle dargestellt bzw. angeordnet werden, da dann darauf geschlossen werden kann, daß der Nutzer diese Wahlmöglichkeiten selten oder generell nicht nutzen möchte. Vorzugsweise wird daher jedoch eine Rückstellung ermöglicht, mittels derer dann wieder eine Grundkonfiguration hergestellt werden kann, um die Nutzung dieser über längere Zeiträume nichtbenutzter Funktionen wieder zu ermöglichen. Hierbei ist es möglich, zwischen der ursprünglichen Grundeinstellung und der aktuellen Funktionsbelegung zu wechseln oder aber die adaptierte Funktionsbelegung zu löschen.

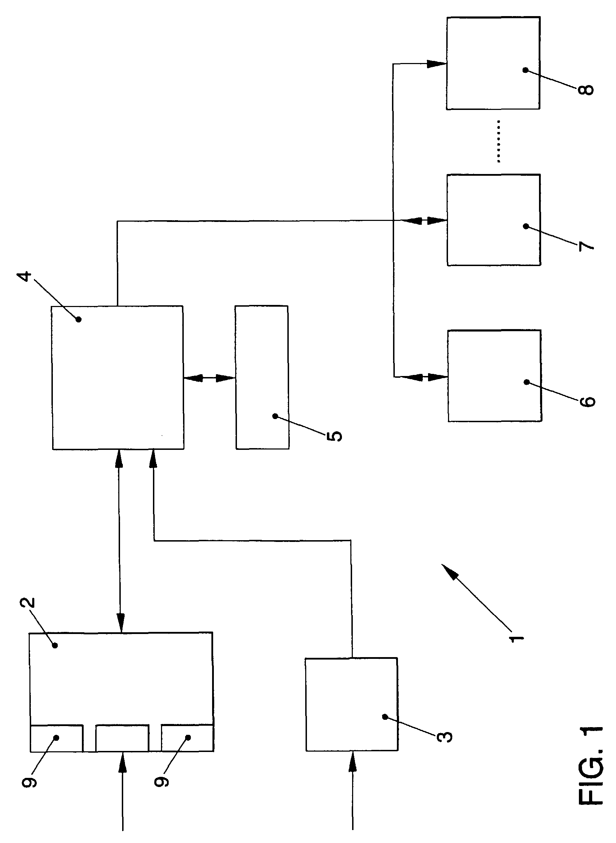

Die Erfindung wird nachfolgend anhand eines bevorzugten Ausführungsbeispiels näher erläutert. Die einzige Figur zeigt ein schematisches Blockschaltbild einer Vorrichtung zur Darstellung von Eingabeoptionen.

Die Vorrichtung 1 umfaßt eine Anzeigeeinrichtung 2, eine Spracherkennungseinrichtung 3, ein Steuergerät 4 mit zugeordnetem Speicher 5, ein Navigationssystem 6, ein Autotelefonsystem 7 und ein Audio-System 8 sowie gegebenenfalls weitere Komfortkomponenten. Die Anzeigeeinrichtung 2 ist als Touch-Screen ausgebildet, in dessen berührungssensitiven Feldern 9 Menüfelder und ähnliches über das Steuergerät 4 dargestellt werden. Die vom Nutzer eingegebenen Befehle und Daten werden an das Steuergerät 4 übertragen. Das Steuergerät 4 übergibt die Befehle und Daten an die zugehörigen Systeme 6-8, für die die Eingaben bestimmt sind und modifiziert gegebenenfalls die Darstellung auf der Anzeigeeinrichtung 2. Des weiteren werden die Befehle und Daten nutzerspezifisch und/oder sitzplatzbezogen im Speicher 5 abgelegt. Vor dem Aufbau einer neuen Darstellung für die Anzeigeneinrichtung 2 überprüft das Steuergerät die vorausgegangenen Befehle und Daten für die jeweilige Darstellung und leitet daraus eine Präferenz des Nutzers ab. Aufgrund dieser Präferenzen modifiziert das Steuergerät 4 die Darstellung derart, daß die präferierten Funktionen und Auswahlmöglichkeiten exponiert auf der Anzeigeeinrichtung 2 dargestellt werden. Die Art der Hervorhebung ist abhängig von der Art der Darstellung und soll zunächst für eine Liste erklärt werden.

Eine derartige Liste existiert beispielsweise für das Autotelefonsystem 7, bei dem der Nutzer ein persönliches Telefonverzeichnis in ein Register eingeben kann. Dieses Register ist entweder in der Reihenfolge der Eingabe oder alphabetisch geordnet. Möchte nun der Nutzer eine Nummer aus diesem Telefonverzeichnis auswählen, so ruft dieser die Liste auf. Da die Liste im Regelfall so groß ist, daß nur ein Teil gleichzeitig auf der Anzeigeeinrichtung 2 dargestellt werden kann, benötigt das Steuergerät 4 hierfür eine Vorschrift. Im Stand der Technik wird daher stets der Anfang der Liste zuerst dargestellt. Dies führt jedoch dazu, daß der Nutzer sich häufig umständlich durch die Liste durcharbeiten muß. Im Gegensatz zum Stand der Technik ist im Speicher 5 abgelegt, welche Nummern am häufigsten gewählt wurden. Das Steuergerät 4 ordnet daher die Liste entsprechend der Häufigkeiten um und stellt zunächst die am häufigsten gewählten Nummern dar. Dabei ist die Wahrscheinlichkeit, daß die gewünschte Nummer dabei ist, bereits sehr groß. Sollte der Nutzer einmal dennoch eine selten gewählte Nummer wünschen, so kann er die aufgrund seiner Präferenzen geordnete Liste wieder zurücksetzen, so daß beispielsweise die Liste wieder alphabetisch geordnet angezeigt wird. Entsprechend werden auch andere Auswählarbeiten, beispielsweise für Radiosender, CD-Titel und Navigationsziel, geordnet und angezeigt.

Ergibt sich aus dem Histogramm im Speicher 5, daß der Nutzer eine bestimmte Funktion wie beispielsweise die Sitzheizung noch nie benutzt hat, so können die Einstellmöglichkeiten ganz unterdrückt werden, kleiner oder an einer visuell schlecht wahrnehmbaren Position auf der Anzeigeeinrichtung 2 dargestellt werden. Umgekehrt werden häufig benutzte Funktionen größer oder an besonders gut wahrnehmbaren Positionen angeordnet. Durch die Auswertung der Historie erfolgt somit eine dynamische Anpassung der Darstellungen an die Benutzergewohnheiten eines Nutzers.

Weiter ist auch eine situationsspezifische Adaption der Funktionsbelegung möglich, wobei die Situation sensorisch erfaßt oder manuell eingebbar ist. Ein Beispiel für eine sensorische Erfassung ist beispielsweise ein Regensensor. Benutzt der Nutzer im Normalfall die Klimaanlage sehr selten, so sind deren zugeordnete Eingabeoptionen an einer untergeordneten Position angeordnet. Fängt es nun an zu regnen, so sind häufig Änderungen an der Gebläseeinstellung und der Heizung vorzunehmen, so daß bei Erfassung von Regen die Klimaanlage-Eingabeoptionen an exponierter Position angeordnet werden. Ein weiterer Sensor könnte beispielsweise ein Außentemperatursensor sein. Ebenso ist es möglich, daß sensorisch ein Stau detektiert wird bzw. die Situation 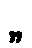 Stau" eingegeben wird, worauf Komfortfunktionen wie Autotelefon oder Audio-Video exponiert dargestellt werden.

### BEZUGSZEICHENLISTE

- 1: Vorrichtung
- 2: Anzeigeeinrichtung
- 3: Spracherkennungseinrichtung
- 4: Steuergerät
- 5: Speicher
- 6: Navigationssystem
- 7: Autotelefonsystem
- 8: Audio-System
- 9: berührungssensitive Felder

## Patentansprüche

1. Verfahren zum Betrieb einer multifunktionalen Anzeige- und Bedieneinrichtung (1), insbesondere in einem Kraftfahrzeug, mit mindestens einer Anzeigeeinrichtung (2) zur menü- und funktionsbezogenen Wiedergabe von Informationen und/oder Parametern, mindestens einer Eingabeeinrichtung (3, 9) zur Menü- und/oder Funktionsauswahl und/oder -betätigung und einem Steuergerät (4), **dadurch gekennzeichnet, daß** im Steuergerät (4) Anzahl und/oder Dauer und/oder Kombinationen von Eingaben und/oder Einstellungen erfaßt werden, daraus mindestens eine Präferenz ableitet und in Abhängigkeit der Präferenz zumindest eine Bedienstruktur und/oder zumindest eine Auswahlliste modifiziert wird.

2. Verfahren nach Anspruch 1, **dadurch gekennzeichnet, daß** die Präferenzen und/oder die in Abhängigkeit der Präferenzen modifizierten Bedienstrukturen und/oder Auswahllisten nutzerspezifisch und/oder sitzplatzbezogen erfaßt und in dem Steuergerät (4) abgespeichert werden.

3. Verfahren nach Anspruch 1 oder 2, **dadurch gekennzeichnet, daß** über einen definierten Zeitraum nicht benutzte Funktionen, Einstell- und Auswahlmöglichkeiten nicht oder untergeordnet dargestellt werden.

4. Verfahren nach einem der Ansprüche 1 bis 3, **dadurch gekennzeichnet, daß** eine Rückstellung der in Abhängigkeit der Präferenz modifizierten Bedienstrukturen und/oder Auswahllisten in die Grundkonfiguration vorgesehen ist.

5. Verfahren nach Anspruch 4, **dadurch gekennzeichnet, daß** die Rückstellung nutzerspezifisch und/oder sitzplatzbezogen erfolgt.

6. Multifunktionale Anzeige- und Bedieneinrichtung (1), insbesondere in einem Kraftfahrzeug, mit mindestens einer Anzeigeeinrichtung (2) zur menü- und funktionsbezogenen Wiedergabe von Informationen und/oder Parametern, mindestens einer Eingabeeinrichtung (3, 9) zur Menü- und/oder Funktionsauswahl und/oder ―betätigung und einem Steuergerät (4), **dadurch gekennzeichnet, daß** von dem Steuergerät (4) Anzahl und/oder Dauer und/oder Kombinationen von Eingaben und/oder Einstellungen erfaßbar und gewichtet als Präferenzen abspeicherbar sind und in Abhängigkeit der Präferenzen zumindest eine Bedienstruktur und/oder zumindest eine Auswahlliste modifizierbar ist.

7. Anzeige- und Bedieneinrichtung (1) nach Anspruch 6, **dadurch gekennzeichnet, daß** die in Abhängigkeit der Präferenzen modifizierten Bedienstrukturen und/oder Auswahllisten auf der Anzeigeeinrichtung (2) wiedergebbar sind.

8. Anzeige- und Bedieneinrichtung (1) nach Anspruch 6 oder 7, **dadurch gekennzeichnet, daß** die Präferenzen und/oder die in Abhängigkeit der Präferenzen modifizierten Bedienstrukturen und/oder Auswahllisten im Steuergerät (4) nutzerspezifisch und/oder sitzplatzbezogen erfaßbar und abspeicherbar sind.

9. Anzeige- und Bedieneinrichtung (1) nach einem der Ansprüche 6 bis 8, **dadurch gekennzeichnet, daß** eine Bedienfunktion vorgesehen ist, mittels derer eine Rückstellung der in Abhängigkeit der Präferenzen modifizierten Bedienstrukturen und/oder Auswahllisten in die Grundkonfiguration möglich ist.

10. Anzeige- und Bedieneinrichtung (1) nach Anspruch 9, **dadurch gekennzeichnet, daß** über die Bedienfunktion eine Rückstellung einzelner modifizierter Bedienstrukturen und/oder Auswahllisten durchführbar ist.

11. Anzeige- und Bedieneinrichtung (1) nach Anspruch 9 oder 10, **dadurch gekennzeichnet, daß** die Rückstellung nutzerspezifisch und/oder sitzplatzbezogen durchführbar ist.
